# EUROPEAN PATENT APPLICATION

(11) **EP 2 866 157 A1**
(43) Date of publication of application: **29.04.2015**
(21) Application number: 13190427.8
(22) Date of filing: 28.10.2013
(51) Int. Cl.: G06F 17/30, G06Q 20/32

(54) **Method, apparatus and system for electronically signing a document by a user by using a portable wireless communication device**

(71) Applicant: Softpro GmbH, 71034 Böblingen (DE)
(72) Inventor: Sarraf, Alain Jules, 71034 Boeblingen (DE); Durner, Nils Holger, 71034 Boeblingen (DE)
(74) Representative: Betten & Resch

(57) **Abstract**

Method for electronically signing a document (10) by a user (20) by using a portable wireless communication device (30), whereby the method comprises the following steps:
providing a visual code (40) comprising encoded process information, whereby the process information comprises
connection information for connecting the portable wireless communication device (30) with a document management system (60) and
document identification information for identifying the document to be signed in said document management system (60);

capturing the visual code (40) with a camera of the portable wireless communication device (30);
decoding the process information from the captured visual code (40) with the portable wireless communication device (30);
triggering a capturing process for capturing the signature (50) of the user (20) after said decoding of the process information;
transmitting signature data of the captured signature (50) via a wireless link to said document management system (60) based on said connection information;
identifying the document to be signed in said document management system (60) based on said document identification information;
electronically embedding the received signature data into an electronic version of said document by said document management system (60).

## Description

### FIELD OF INVENTION

The present invention relates to a method, an apparatus and a system for electronically signing a document by a user by using a portable wireless communication device.

### BACKGROUND OF THE INVENTION

Currently, a document is electronically signed by a person by attaching a signing device (signing pad, digitizer) to a computer and using it to capture a person's signature. Special software is needed to capture the signature and embed it into the signed document.

While the previously described process works well enough in a controlled environment, problems arise if used in an open environment. If a service provider tries to integrate external users (say a bank having a document signed by one of its customers in the web), it has no control over the hardware and software the external user uses on his computer.

Supporting all brands of signing devices / digitizers and operating systems the users could own is not feasible. Requiring a specific brand of device and software combination is also a problem, either the service provider or the users need to bear the additional high costs.

Moreover, operating such a signing solution in a 'Software as a Service' (SaaS) setting for multiple B2B customers introduces challenges to customizing look and feel, separation of B2B client data sets, and unambiguous assignment of signatures to the documents they belong to.

Traditionally, distinction between such individual data sets has been established through short tag codes, identifiers or authentication tokens (pairing codes). However, modern probing capabilities have rendered this practice insecure. In particular, establishing connectivity between signature capture devices and specific web sessions is a challenge.

### SUMMARY OF THE INVENTION

The present invention is defined in the independent claims. The dependent claims define embodiments of the invention.

According to one embodiment there is provided a method for electronically signing a document by a user by using a portable wireless communication device, whereby the method comprises the following steps:
providing a visual code comprising encoded process information, whereby the process information comprises connection information for connecting the portable wireless communication device with a document management system and document identification information for identifying the document to be signed in said document management system;
capturing the visual code with a camera of the portable wireless communication device;
decoding the process information from the captured visual code with the portable wireless communication device;
triggering a capturing process for capturing the signature of the user after said decoding of the process information;
transmitting signature data of the captured signature via a wireless link to said document management system based on said connection information;
identifying the document to be signed in said document management system based on said document identification information;
electronically embedding the received signature data into an electronic version of said document by said document management system.

By integrating a portable wireless communication device as described above into the signing process, the signing process does not require special hardware or software for the signer other than a portable wireless communication device and possibly an application (app) installed on said device. Thereby, the client side functionality is facilitated. The above method adds new functionality to the device thus eliminating the need of a specialized signature capture equipment. The fact that portable wireless communication device (for example smartphones, tablet computers, devices comprising touchscreens etc.) are now very common, makes the signing process usable in a heterogeneous environment and solves the above mentioned connectivity and security issues.

According to one embodiment the visual code is a QR-code, a barcode, or a flicker code. Any other suitable encoding schemes may be used as well.

This is a suitable way of encoding the process information and providing it to the user.

According to one embodiment the capturing process comprises:
capturing a handwritten signature acquired by a touch screen of the portable wireless communication device, using a pen or finger;
receiving a digital signature, which is managed by the portable wireless communication device;
capturing a picture of the user taken with the camera of the portable wireless communication device;
capturing a fingerprint acquired by a fingerprint reader of the portable wireless communication device; and/or
capturing a voiceprint acquired by the portable wireless communication device.

These are a suitable and advantageous possibilities for reliably capturing the signature of the user. A combination of these possibilities may enhance the security level of the signing process. With respect to the digital signature, the digital signature may be generated on the fly by the portable wireless communication device or may be stored in the portable wireless communication device.

According to one embodiment the process information further comprises document verifying information enabling the user to verify that the signature to be given actually relates to the document to be signed;
authentication and/or encryption information for accessing the document management system;
parameter information for specifying how the signature should be captured by the portable wireless communication device; and/or
validity time information for limiting the time for signing the document.

The document verifying information enables the signer to verify that the signature to be given actually relates to the document he is looking at. Information can include, but is not limited to, document or contract number, amount, hash code or digital signature of the document. The document identification information may also be used in all embodiments as document verifying information enabling the user to verify that the signature to be given actually relates to the document to be signed.

The authentication and/or encryption information may be used in case a secure connection is needed, this information will be used to authenticate the app to the document management system and/or encrypt the connection.

The parameter information can contain additional parameters specifying what options should be used for the signing process. This can be a defined timespan after the triggering of the capturing process in which the user has to give his signature, the number of signatures needed (for a digital reference signature), etc.

The validity time information makes the document to be signed valid only for a specific timeframe and will prevent signing at a later time.

According to one embodiment the capturing process furthermore comprises the recording additional information during the signature capturing step, preferably a picture, the location information (GPS/GSM position) at the time of signing, the device id, the date and/or time.

The additional information may be used to further document the signing process.

According to one embodiment the method further comprises a step of connecting a computer to said document management system and displaying the document to be signed on the screen of said computer.

This is a suitable way to present the document to be signed to the signer in the same workflow, via a computer display in a browser, signature application, etc. Thus, embedding the document to be signed in the current workflow (for example an online order process) facilitates the signing process. It should be understood that the "computer" in this embodiment is a device which is different and separate from the portable wireless communication device.

According to one embodiment, in the step of providing a visual code, the visual code is displayed on said computer screen.

This makes the integration much easier, since no major changes to the current workflow are needed. The user may then simply capture the visual code by taking a picture of the computer screen displaying said visual code.

According to one embodiment the signature is displayed dynamically in real time on the computer screen, while the signature of the user is captured on the portable wireless communication device. Thereby, the user can control in real time whether the signature is embedded correctly in the document to be signed.

According to one embodiment the computer screen displays an order document in an online order process and the document identification information comprises preferably order number, date and time, final amount of the order, and the connection information comprises the URL of the document management system.

This is a convenient way for providing document identification information and connection information based on work flow parameters of the online order process.

According to one embodiment the computer screen is arranged in a bank teller machine.

This facilitates and enables signing banking agreements when the user is using such bank teller machine.

According to one embodiment, in the step of providing a visual code, the visual code is printed on an object, preferably on paper.

In this manner, the user may for example receive an offer, including a personalized, ready to sign contract on paper. Since the user is enabled to sign the paper version of the contract on the portable wireless communication device, the return of the paper version of the contract is not necessary any longer.

According to one embodiment the method further comprises the step of providing personalization information, which is transmitted together with the signature data to the document management system and enables the document management system to associate user identification information to said document to be signed.

The personalization information may be stored for example on the wireless communication device as user identification information, which can for example be the name of the user.

Alternatively, the process information may comprise said personalization information, which then enables the document management system to associate user identification information to said document to be signed. Here, the user identification information may be stored in advance in the document management system.

These are suitable ways for signing a template document, which can be provided to a multitude of users. The signature data of the single user is then embedded together with the individual user identification information (which can for example be the name of the user) into the document to be signed in order to clearly identify the person of the user, the document and the corresponding signature in the document management system.

According to one embodiment the method comprises the step of associating user identification information to the document to be signed. Thus, for example the name of the user may be integrated into the document to be signed. It may be possible that the document management system is adapted to associate said user identification information to the document to be signed. Different systems may also perform said step.

According to one embodiment there is provided a portable wireless communication device for electronically signing a document by a user, comprising:
a camera being adapted to capture a visual code comprising encoded process information, whereby the process information comprises
connection information for connecting the portable wireless communication device with a document management system and
document identification information for identifying the document to be signed in said document management system;
a module being adapted to decode the process information from the captured visual code;
a module being adapted to trigger a capturing process for capturing the signature of the user after said decoding of the process information;
a module being adapted to transmit signature data of the captured signature via a wireless link to said document management system based on said connection information such that the document to be signed is identified in said document management system based on said document identification information and the received signature data is electronically embedded into an electronic version of said document by said document management system.

This is a suitable way of implementing a portable wireless communication device according to an embodiment of the invention.

According to one embodiment there is provided a system for electronically signing the document by a user, comprising:
a visual code comprising encoded process information, whereby the process information comprises
connection information for connecting the portable wireless communication device with a document management system and
document identification information for identifying the document to be signed in said document management system;
a portable wireless communication device, comprising
a camera being adapted to capture a visual code comprising encoded process information;
a module being adapted to decode the process information from the captured visual code;
a module being adapted to trigger a capturing process for capturing the signature of the user after said decoding of the process information; and
a module being adapted to transmit signature data of the captured signature via a wireless link to said document management system based on said connection information; and
a document management system, comprising
a module being adapted to identify the document to be signed based on said document identification information; and
a module being adapted to electronically embed the received signature data into an electronic version of said document.

This is a suitable way of implementing a system according to an embodiment of the invention.

According to one embodiment the portable wireless communication device or the system further comprise modules for carrying out a method according to one of the embodiments of the invention.

According to one embodiment there is provided a computer program comprising computer program code which when being executed on a computer enables said computer to carry out a method according to one of the embodiments of the invention.

### BRIEF DESCRIPTION OF THE DRAWINGS

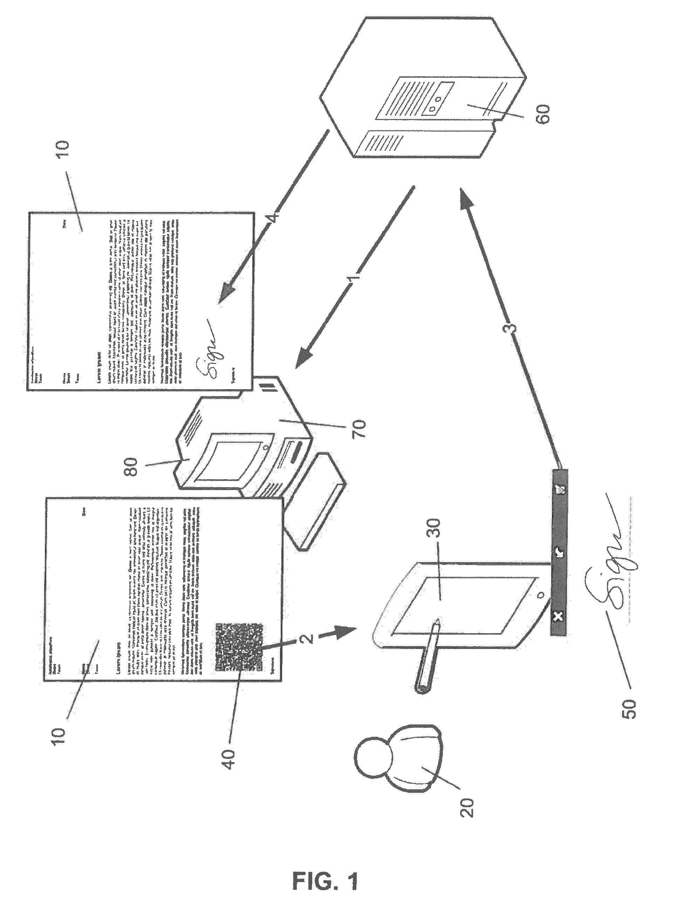

Fig. 1 schematically illustrates an embodiment for electronically signing a document by a user by using a portable wireless communication device.

### DETAILED DESCRIPTION

Fig. 1 illustrates phases 1 to 4 according to an embodiment of the present invention:
Phase 1: A document 10 to be signed is displayed on a computer screen 80 to a user 20. The document 10 may be displayed in a browser or in a signature application, etc. The document 10 contains a visual code 40 having encoded process information for the signature capture process.

In general, the signature field in the document 10, the frame of the signature field, or another area of the document 10, may contain the visual code 40. In case of document constraints, the code can also be displayed after a click on the signature field or button. The visual code 40 can be a QR-code, barcode, flicker code, or a different encoding form.

Phase 2: The user 20 scans the visual code 40 using the camera of the portable wireless communication device 30. The portable wireless communication device 30 may be provided as a smartphone 30 having recorded thereon a signing application (app).

Phase 3: The signing app decodes the encoded process information. The process information comprises connection information for connecting the smartphone 30 with a document management system 60 and document identification information for identifying the document to be signed in said and by said document management system 60. Signature data is then sent to the document managing system 60 based on the connection information.

Furthermore, the signing app may optionally use decoded process information stored in the visual code 40 to identify or verify the document 10, to display relevant information and/or to capture the signature 50.

Phase 4: The document managing system 60 identifies the document 10 based on the document identification information, embeds the signature into the document 10 and displays the result on the computer screen 80.

The smartphone app can optionally relay the signature information real time, while the user signs on screen, thus enabling the document management system 60 to display the signature dynamically, while signing, on the separate document display, namely the computer screen 80.

Optionally, changes and/or variations to the look and feel of the smartphone app (colors, screen design), B2B client logo, explanatory or introductory texts may be provided. Moreover, it is possible to implement B2B client identifiers and/or storage/processing realms. Additional information may also be sent along with the signature data, for example workflow information.

The signature can optionally be verified against other existing signatures / references of the same user on file. Also, if needed, the minimal requirements of the signature can be verified (complexity, number of references, required time for signing on the touchscreen, measured pressure during signing on the touchscreen etc.).

Once received, the document management system 60 embeds the signature into the document 10 to be signed. Optionally, the document 10 can be secured against further modification once the signature is embedded. The signature can replace the visual code 40 in the document 10. The user 20 will be informed via the document display, namely the computer screen 80, and/or the signature app on the smartphone 30 display of the successful completion of the signing process or of any errors encountered.

In the following, further embodiments of the present invention are described:

### Signing an order online

An online shop wants to have orders signed with a handwritten signature by its users 20. The user 20 uses a browser on his computer 70 to complete the order process and request an order document 10. The order document 10 is generated with a signature field, containing the visual code 30, for example a QR-code 40, for the signature capture and is displayed on the computer screen 80.

The QR-code 40 contains document identification information identifying the signed order (for example order number, date and time, final amount) and connection information, for example the URL of the server of the document management system 60 processing the document 10 and signature data.

The document identification information may also be generally used in all embodiments as document verifying information enabling the user 20 to verify that the signature 50 to be given actually relates to the document 10 to be signed.

Authentication and/or encryption information to access the server and parameters for the to be captured signature 50 may be contained as well in the QR-code 40.

The user 20 checks the order, then points his smartphone camera to the QR-code 40 shown on screen. The signing app decodes the QR-code 40 and opens a signature field on screen displaying the order information, which can be based on the document verifying information. The user 20 can check that the signature is indeed captured for the correct order by matching the order information displayed with the one on the computer screen 80. He then proceeds to sign on the touch sensitive screen of the smartphone using either a touch pen or a finger. The signature is sent to the URL contained in the QR-code 40 using the access and authentication information given. Upon verification of said information, the server identifies the document 10 in the document management system 60, integrates the signature in the document 10, displays the now signed document 10 on the computer screen 80 and stores it in a database.

### Signing a contract at a bank teller machine (ATM)

A bank wants to be able to offer its users 20 the possibility of signing new contracts while using the ATM. While using the ATM (possibly while / after withdrawing money) the user 20 gets the choice of signing a new contract or expanding options of existing ones. If the user 20 agrees, the teller machine will display the contract details, including a signature field showing a QR-code 40 as described above. The QR-code 40 contains document identification information (for example contract number, payment details) and the URL of the server of the document management system 60 processing the document 10 and signature data as connection information.

Moreover, authentication and/or encryption information to access the server and identification information of the signing app to use can be contained in the QR-code 40.

The user 20 uses his smartphone 30 to capture the process information, namely the QR-code data. If the signing app is not yet installed, the smartphone can use the app information contain the QR-code 40 to load the signing app from the app repository. The app will then decode the QR-information and show a signing field on the smartphone screen. The signing screen will display the contract identification information, giving the user 20 the possibility to compare it against the information shown on the teller machine display, thus checking that the signing process relates to the contract he intends to sign. He can then sign on the smartphone touch-screen. The signature data is sent to the URL identified in the connection information, encryption and/or authentication information may additionally be provided. Upon optionally verifying the authentication information, the document 10 is identified in and by the document management system 60 by the server. The server embeds the signature into the document 10 identified, stores it and displays the information and signed document on the ATM screen.

### Electronically signing a paper document

A company sends postal mail to users 20, containing a contract offer that can be signed online. The user 20 receives an offer, including a personalized, ready to sign contract on paper document 10. Next to the signature field a QR-code 40 is printed. The user 20 can either sign the form and send it back via mail, or point his smartphone 30 to the QR-code 40 and be presented with a signature field to sign the document electronically. The signature field may display a personalized welcome message or a consent message ("you agree to give your signature electronically...") in the sender's corporate style, relevant contract data to verify that it is linked to the correct contract. The QR-code 40 can also include a validity time, which makes the offer valid only for a specific timeframe and will prevent signing at a later time. Once a signature is given via the touch sensitive display of the smartphone 30, the signature is sent and embedded into the electronic version of the contract via the connection information and the document identification information encoded in the QR-code. Additionally, authentication and/or encryption information may be used as described above. The user 20 may receive confirmation of the signing process on his smartphone display.

### Signing a promotion offer

A company sends a document 10 in the form of promotion flyer to its customer base. The flyer may be a paper based advertising that may include a contract, but has not to be personalized to the user 20. It contains for example a QR code 40 comprising the connection information and the document identification information. In addition, a validity time for the promotion can be included (last day available). The user 20 who decides to accept the offer points his mobile device camera 30 to the QR code 40 printed on the promotion document 10. The signing app decodes the QR-code, may additionally checks that the offer has not expired (current date before expiry date contained in the QR-code), and opens a signature field. The customer signs the order on the mobile device. The customer's signature data and user identification information, which may be stored on the wireless device (or signing app), is sent to the server 60 identified by the connection information in the QR-code, e.g. based on URL. The user identification information and signature is used to validate the contract and is stored in the database. A personalized version of the contract 10 can be generated if needed.

## Claims

1. Method for electronically signing a document (10) by a user (20) by using a portable wireless communication device (30), whereby the method comprises the following steps:
providing a visual code (40) comprising encoded process information, whereby the process information comprises
connection information for connecting the portable wireless communication device (30) with a document management system (60) and
document identification information for identifying the document to be signed in said document management system (60);
capturing the visual code (40) with a camera of the portable wireless communication device (30);
decoding the process information from the captured visual code (40) with the portable wireless communication device (30);
triggering a capturing process for capturing the signature (50) of the user (20) after said decoding of the process information;
transmitting signature data of the captured signature (50) via a wireless link to said document management system (60) based on said connection information;
identifying the document to be signed in said document management system (60) based on said document identification information;
electronically embedding the received signature data into an electronic version of said document by said document management system (60).

2. The method of claim 1, wherein the visual code (40) is a QR-code, a barcode, or a flicker code.

3. The method of one of the preceding claims, wherein the capturing process comprises:
capturing a handwritten signature (50) acquired by a touch screen of the portable wireless communication device (30), using a pen or finger;
receiving a digital signature, which is managed by the portable wireless communication device (30);
capturing a picture of the user (20) taken with the camera of the portable wireless communication device (30);
capturing a fingerprint acquired by a fingerprint reader of the portable wireless communication device (30); and/or
capturing a voiceprint acquired by the portable wireless communication device (30).

4. The method of one of the preceding claims, wherein the process information further comprises
document verifying information enabling the user (20) to verify that the signature (50) to be given actually relates to the document to be signed;
authentication and/or encryption information for accessing the document management system (60);
parameter information for specifying how the signature (50) should be captured by the portable wireless communication device (30); and/or
validity time information for limiting the time for signing the document.

5. The method of one of the preceding claims, further comprising the step of connecting a computer (70) to said document management system (60) and displaying the document to be signed on the screen (80) of said computer (70).

6. The method of claim 5, wherein in the step of providing a visual code (40), the visual code (40) is displayed on said computer screen (80).

7. The method of claims 5 or 6, wherein the signature (50) is displayed dynamically in real time on the computer screen (80), while the signature (50) of the user (10) is captured on the portable wireless communication device (30).

8. The method according to one of claims 5 to 7, wherein the computer screen (80) displays an order document in an online order process and the document identification information comprises preferably order number, date and time, final amount of the order, and the connection information comprises the URL of the document management system (60).

9. The method according to one of claims 5 to 8, wherein the computer screen (80) is arranged in a bank teller machine.

10. The method of one of the preceding claims, wherein in the step of providing a visual code (40), the visual code (40) is printed on an object, preferably on paper.

11. The method of one of the preceding claims, further comprising the step of providing personalization information, which is transmitted together with the signature data to the document management system (60) and enables the document management system (60) to associate user identification information to said document to be signed.

12. Portable wireless communication device for electronically signing a document (10) by a user (20), comprising:
a camera being adapted to capture a visual code (40) comprising encoded process information, whereby the process information comprises
connection information for connecting the portable wireless communication device (30) with a document management system (60) and
document identification information for identifying the document to be signed in said document management system (60);
a module being adapted to decode the process information from the captured visual code (40);
a module being adapted to trigger a capturing process for capturing the signature (50) of the user (20) after said decoding of the process information;
a module being adapted to transmit signature data of the captured signature (50) via a wireless link to said document management system (60) based on said connection information such that the document to be signed is identified in said document management system (60) based on said document identification information and the received signature data is electronically embedded into an electronic version of said document by said document management system (60).

13. System for electronically signing a document (10) by a user (20), comprising:
a visual code (40) comprising encoded process information, whereby the process information comprises
connection information for connecting the portable wireless communication device (30) with a document management system (60) and
document identification information for identifying the document to be signed in said document management system (60);
a portable wireless communication device (30), comprising
a camera being adapted to capture a visual code (40) comprising encoded process information;
a module being adapted to decode the process information from the captured visual code (40);
a module being adapted to trigger a capturing process for capturing the signature (50) of the user (20) after said decoding of the process information; and
a module being adapted to transmit signature data of the captured signature (50) via a wireless link to said document management system (60) based on said connection information; and
a document management system (60), comprising
a module being adapted to identify the document to be signed based on said document identification information; and
a module being adapted to electronically embed the received signature data into an electronic version of said document.

14. The portable wireless communication device (30) according to claim 12 or the system according to claim 13, further comprising modules for carrying out a method according to one of claims 2 to 11.

15. A computer program comprising computer program code which when being executed on a computer enables said computer to carry out a method according to one of claims 1 to 12.
